# EUROPEAN PATENT APPLICATION

(11) **EP 2 604 398 A2**
(43) Date of publication of application: **19.06.2013**
(21) Application number: 12197206.1
(22) Date of filing: 14.12.2012
(51) Int. Cl.: B25J 15/02, B25J 15/04, B25J 15/12, B25J 11/00

(54) **Robot and robot hand**

(30) Priority: 16.12.2011 JP 2011275360
(71) Applicant: Seiko Epson Corporation, Tokyo 163-0811 (JP)
(72) Inventor: Shiomi, Masahiro, Nagano, 392-8502 (JP)
(74) Representative: HOFFMANN EITLE

(57) **Abstract**

A robot hand for grasping an object to be grasped includes plural bar-shaped placing sections on which the object to be grasped is placed, plural holding sections which hold lateral sides of the object to be grasped, and a space adjusting section which moves the plural placing sections and the plural holding sections to adjust the space between the plural placing sections.

## Description

### BACKGROUND

### 1. Technical Field

The present invention relates to a robot and a robot hand.

### 2. Related Art

A robot which grasps an object to be grasped is utilized in work such as assembling and sorting. There are various different objects to be grasped which a robot is supposed to grasp. JP-A-2011-73099 discloses a grasping device capable of grasping objects ranging from high-hardness objects to soft objects. According to this technique, the grasping device has a pair of pads with variable distances, and the surfaces of the pads facing each other remain parallel. The grasping device grasps an object to be grasped, holding lateral sides of the object to be grasped between the pads.

Also, JP-A-2010-36328 discloses a robot hand which lifts and grasps an object to be grasped. According to this technique, a thin plate-like pawl section is arranged at the tip of a finger of the robot hand. The robot hand lifts the object to be grasped by inserting the pawl section between the bottom surface of the object to be grasped and the plane where the object to be grasped is placed. With this technique, the object to be grasped is supported on the bottom surface and therefore even a soft object to be grasped can be grasped.

The grasping device disclosed in JP-A-2011-73099 holds a soft object from lateral sides thereof between the pads. Therefore, when the soft object is deformed in pressurization by the pads, the soft object cannot be grasped. In the robot hand disclosed in JP-A-2010-36328, when the distance between neighboring objects to be grasped is narrow, the pawl section cannot be inserted and therefore the object to be grasped cannot be grasped. Thus, a robot hand and a robot that can grasp an object to be grasped even when soft objects to be grasped are arrayed with a narrow space between each other are desired.

### SUMMARY

An advantage of some aspects of the invention is to solve at least a part of the problems described above, and the invention can be implemented as the following forms or application examples.

### Application Example 1

This application example is directed to a robot including a robot hand including: a placing section which is formed by a bar in the form of a substantially quadrilateral frame with a first supporting member and where an object to be grasped is placed; a supporting section which is formed by connecting one end of a second supporting member to a center of the first supporting member and retains the placing section; a space adjusting section which moves the supporting section while retaining the second supporting member, and adjusts a space between plural units of the placing section; and a holding section arranged within the frame formed by the first supporting member and the placing section.

According to this application example, the robot hand has the placing section, which is formed by a bar in the form of a substantially quadrilateral frame with the first supporting member. The space adjusting section moves the placing section and thus adjusts the space of the placing section. By making the space of the placing section narrower than the length of the object to be grasped, the object to be grasped can be placed on the placing section. Moreover, as the holding section holds a lateral side of the object to be grasped, the distance between the placing section and the lateral side of the object to be grasped can be adjusted. Therefore, the object to be grasped can be placed on the placing section stably. Consequently, the robot hand can grasp a soft object to be grasped. Moreover, when objects to be grasped are arranged in line, the bar-shaped placing section is made to pass between the objects to be grasped. Thus, the placing section can be moved to the bottom of an object to be grasped. Therefore, even when objects to be grasped are arranged closely to each other in line, an object to be grasped can be grasped.

### Application Example 2

This application example is directed to the robot according to the above application example, wherein the part where the placing section contacts a bottom of the object to be grasped is a substantially linear bar.

According to this application example, the part where the placing section contacts the bottom of the object to be grasped may be a substantially linearly bar. When the object to be grasped is situated on a plane, the bottom of the object to be grasped is a flat surface. Therefore, the placing section can be moved along the plane. Consequently, the placing section can be moved easily between the object to be grasped and the plane.

### Application Example 3

This application example is directed to the robot according to the above application example, wherein a cross-sectional shape of the placing section orthogonal to a longitudinal direction is substantially circular or substantially elliptical.

According to this application example, the cross-sectional shape of the placing section may be substantially circular or substantially elliptical. Therefore, when the placing section moves along the object to be grasped, the placing section is not easily caught by the object to be grasped. Consequently, the placing section can easily move along the object to be grasped.

### Application Example 4

This application example is directed to the robot according to the above application example, wherein a cross-sectional shape of the placing section orthogonal to a longitudinal direction is substantially quadrilateral.

According to this application example, the cross-sectional shape of the placing section may be substantially quadrilateral. Therefore, the strength of the placing section can be increased even when the width of the cross-sectional shape of the placing section is narrowed.

### Application Example 5

This application example is directed to the robot according to the above application example, wherein the holding section includes a central area including a center and a peripheral area including a periphery of the central area and the central area has a smaller spring constant than a spring constant of the peripheral area.

According to this application example, the central area of the holding section may have a smaller spring constant than the peripheral area. If the object to be grasped is spherical, the object to be grasped contacts the central area of the holding section and then contacts the peripheral area of the holding section. In this case, since the central area has a smaller spring constant, the holding section contacts the object to be grasped, following the object to be grasped. Thus, the object to be grasped cannot move easily. Therefore, the robot hand can grasp the object to be grasped stably.

### Application Example 6

This application example is directed to the robot according to the above application example, wherein at least a part of a site contacting the object to be grasped of the placing section and the holding section, is made of a metal.

According to this application example, a part of the placing section and the holding section may be made of a metal. The metal is a material that is not easily deteriorated in cleaning and sterilization. Therefore, the placing section and the holding section can be cleaned and sterilized while restraining deterioration of these sections. In this case, the site that is cleaned and sterilized, of the placing section and the holding section, is the site contacting the object to be grasped. Therefore, the placing section and the holding section can be cleaned and sterilized while restraining adherence of a cleaning solution and a sterilizing solution to the space adjusting section.

### Application Example 7

This application example is directed to the robot according to the above application example, wherein the placing section and the holding section are formed as an integrated unit.

According to this application example, the placing section and the holding section may be formed as an integrated unit. Therefore, the placing section and the holding section can be formed easily.

### Application Example 8

This application example is directed to the robot according to the above application example, wherein at least a part of the holding section is made of an elastic material.

According to this application example, at least a part of the holding section may be made of an elastic material. Therefore, as the elastic member is arranged at the site contacting the object to be grasped, the object to be grasped can be prevented from being damaged.

### Application Example 9

This application example is directed to the robot according to the above application example, wherein the holding section is attachable to and removable from the placing section.

According to this application example, the holding section may be attachable to and removable from the placing section. When the holding section contacts the object to be grasped, a part of the object to be grasped may adhere to the holding section. Even in this case, the holding section may be detached from the placing section and the holding section may be replaced. Thus, a holding section without having a part of the object to be grasped attached thereto can be substituted.

### Application Example 10

This application example is directed to the robot according to the above application example, wherein the holding section is attachable to and removable from the space adjusting section.

According to this application example, the holding section may be arranged in an attachable and removable manner with respect to the space adjusting section. When the holding section contacts the object to be grasped, a part of the object to be grasped may adhere to the holding section. Even in this case, the holding section may be detached from the space adjusting section and the holding section may be replaced. Thus, a holding section without having a part of the object to be grasped attached thereto can be substituted.

### BRIEF DESCRIPTION OF THE DRAWINGS

The invention will be described with reference to the accompanying drawings, wherein like numbers reference like elements.

FIGS. 1A to 1C relate to a first embodiment. FIG. 1A is a schematic perspective view showing the configuration of a robot hand. FIG. 5B is a schematic front view showing the configuration of the robot hand. FIG. 5C is a schematic enlarged view showing essential parts of a placing section.

FIGS. 2A to 2D are schematic views for explaining a procedure in which the robot hand grasps an object to be grasped.

FIGS. 3A to 3D are schematic views for explaining a procedure of grasping an object to be grasped according to a second embodiment.

FIGS. 4A to 4E are schematic views for explaining a procedure of attaching and removing a placing section and a holding section.

FIGS. 5A and 5B are schematic front views showing a structure for attaching and removing a placing section according to a third embodiment.

FIG. 6 is a schematic cross-sectional view showing essential parts of the structure of a placing section according to a fourth embodiment.

FIGS. 7A to 7F are schematic views showing the structure of a robot hand according to a fifth embodiment.

FIGS. 8A to 8E are schematic views showing the structure of a robot hand.

FIGS. 9A and 9B are schematic views showing the structure of a robot hand.

### DESCRIPTION OF EXEMPLARY EMBODIMENTS

Hereinafter, embodiments will be described with reference to the drawings. Each member in the drawings is shown on different scales so that each member appears in a recognizable size in each drawing.

### First Embodiment

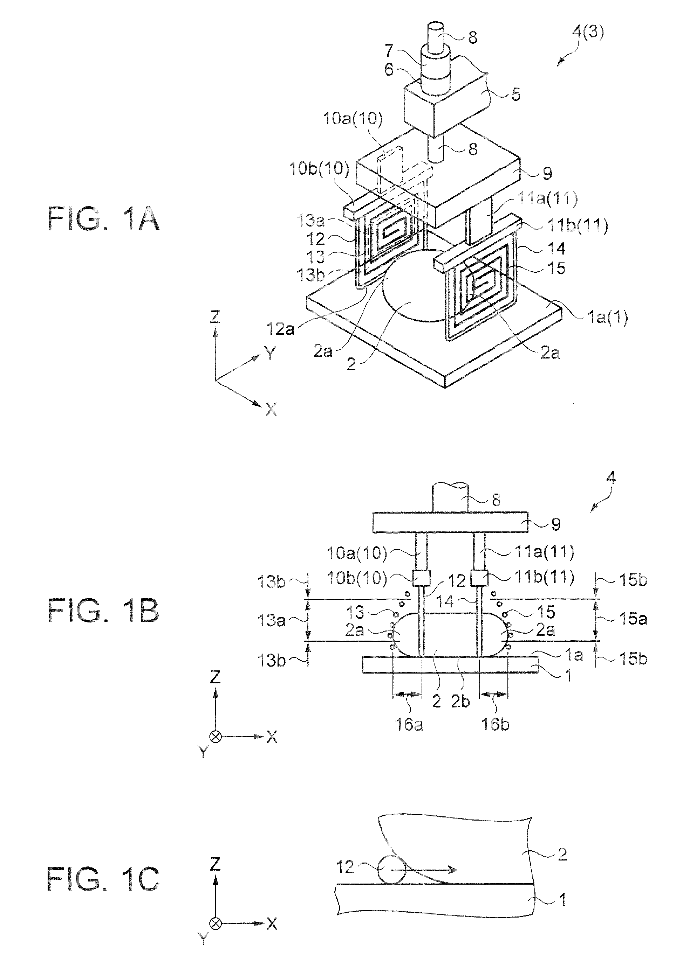

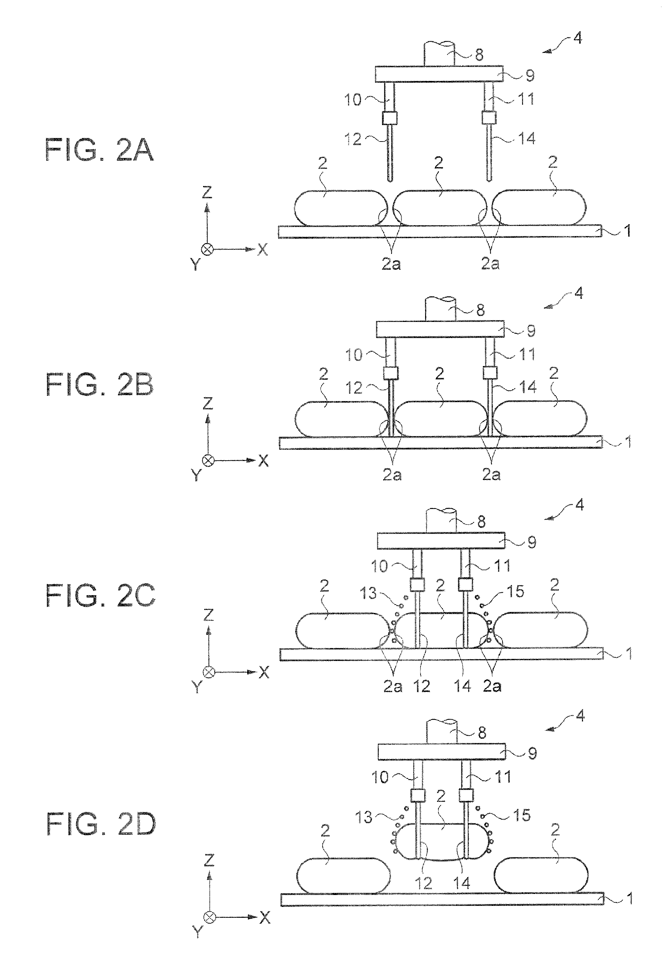

In this embodiment, an example of a characteristic robot hand and a robot which grasps an object to be grasped with this robot hand is described with reference to FIGS. 1A to 1C and FIGS. 2A to 2D. FIG. 1A is a schematic perspective view showing the configuration of the robot hand.

As shown in FIG. 1A, an object to be grasped 2 is placed on a substantially quadrilateral plate-like placing table 1. A plane of the placing table 1 that faces upward in the drawings is a plane 1a. The direction of a normal line to the plane 1a is opposite to the direction in which gravitational acceleration acts, and this direction is referred to as a Z direction. The directions along the plane 1a are referred to as an X direction and a Y direction. The X direction, Y direction and Z direction are orthogonal to each other.

The object to be grasped 2 is a soft object, for example, in the form of a creamy croquette, konjac gel, tofu, agar gel or the like. The object to be grasped 2 is an object which is easily deformed when pressurized and restores the original shape when the pressurization is stopped. Therefore, when the object to be grasped 2 is held and grasped from the opposite lateral sides 2a of the object to be grasped 2, the object to be grasped 2 is deformed and hence difficult to grasp.

A robot hand 4 installed on a robot 3 is situated in the Z direction of the object to be grasped 2. The robot 3 has an arm 5 extending in the Y direction and plural arms and joints, not shown, connected to the arm 5. The robot 3 can rotate these joints to move the arm 5.

A lift mechanism 6 and a rotation mechanism 7 are installed at a distal end of the arm 5. The lift mechanism 6 and the rotation mechanism 7 rotate a lift-rotation shaft 8 and move the lift-rotation shaft 8 back and forth in the Z direction. The structure of the lift mechanism 6 and the rotation mechanism 7 is not particularly limited. For example, in this embodiment, the lift mechanism 6 has a structure with a combination of a motor and a ball screw, and the ball screw linearly moves the lift-rotation shaft 8. The rotation mechanism 7 has a structure with a combination of a motor and a deceleration gear, and the deceleration gear rotates the lift-rotation shaft 8.

The robot hand 4 is installed at one end in the -Z direction of the lift-rotation shaft 8. The robot hand 4 has a space adjusting section 9 which is connected to the lift-rotation shaft 8. On the -Z side of the space adjusting section 9, a first supporting section 10 and a second supporting section 11 are installed, connected to the space adjusting section 9.

The space adjusting section 9 has a linear motion mechanism and moves the first supporting section 10 and the second supporting section 11 back and forth in the X direction. The space adjusting section 9 also has a function of adjusting the distance between the first supporting section 10 and the second supporting section 11. The structure of the linear motion mechanism provided in the space adjusting section 9 is not particularly limited. However, in this embodiment, for example, this linear motion mechanism is configured with a combination of a step motor and a ball screw.

The first supporting section 10 is formed by connecting the center of a rectangular parallelepiped first supporting member 10b extending in the Y direction to one end of a rectangular bar-like second supporting member 10a extending in the Z direction. Similarly, the second supporting section 11 is formed by connecting the center of a rectangular parallelepiped first supporting member 11b extending in the Y direction to one end of a rectangular bar-like second supporting member 11a extending in the Z direction. The second supporting member 10a and the second supporting member 11a are connected to the linear motion mechanism of the space adjusting section 9. The space between the second supporting member 10a and the second supporting member 11a is adjusted by the space adjusting section 9. The first supporting section 10 and the second supporting section 11 may be made of any material that can tolerate cleaning and sterilization and are not limited to a particular material. In this embodiment, for example, stainless steel is employed as the material of the first supporting section 10 and the second supporting section 11. For the sterilization, boiling water sterilization or chlorine sterilization is carried out.

On the -Z side of the first supporting member 10b, a placing section 12 and a holding section 13 are installed. The placing section 12 is formed using a round bar. The first supporting member 10b and the placing section 12 form a quadrilateral frame. The placing section 12 has such a high strength that the placing section 12 is hard to deform even when the placing section 12 advances between the placing table 1 and the object to be grasped 2. A bottom part 12a situated on the side of the -Z direction of the placing section 12 is linearly formed and is parallel to the plane 1a. Thus, the placing section 12 can be moved along the plane 1a. Therefore, the placing section 12 can easily be moved between the object to be grasped 2 and the plane 1a.

The holding section 13 is arranged inside the space surrounded by the first supporting member 10b and the placing section 12. In the holding section 13, a round bar with spring elasticity is spirally shaped. More specifically, the round bar is in a spiral shape formed by a combination of straight lines parallel to the first supporting member 10b or the placing section 12. The holding section 13 has a central area 13a which is situated at the center and a peripheral area 13b situated on the periphery of the central area 13a. In the central area 13a, the space between the round bars of the spiral is broader than in the peripheral area 13b. Thus, the central area 13a has a smaller spring constant than the peripheral area 13b.

Similarly, in the second supporting section 11, a placing section 14 and a holding section 15 are installed on the -Z side of the first supporting member 11b. The placing section 14 has a similar shape and similar function to the placing section 12 of the first supporting section 10. The holding section 15 has a similar shape and similar function to the holding section 13 of the first supporting section 10.

The placing section 12, the holding section 13, the placing section 14 and the holding section 15 may be made of any material that can tolerate cleaning and sterilization and are not limited to a particular material. In this embodiment, for example, stainless steel is employed as the material of the placing section 12, the holding section 13, the placing section 14 and the holding section 15. A metal is a material that is hard to deteriorate in cleaning and sterilization. Therefore, the placing section 12, the holding section 13, the placing section 14 and the holding section 15 can be cleaned and sterilized while restraining deterioration of these sections. Moreover, the sites that are cleaned and sterilized, of the placing section 12, the holding section 13, the placing section 14 and the holding section 15, are close to the placing table 1 and opposite to the space adjusting section 9. Therefore, the placing sections and the holding sections can be cleaned while restraining adherence of a cleaning solution and a sterilizing solution to the space adjusting section.

FIG. 1B is a schematic front view showing the configuration of the robot hand and shows how the robot hand grasps the object to be grasped. As shown in FIG. 1B, the space adjusting section 9 moves the first supporting section 10 and the second supporting section 11 and makes the space between the first supporting section 10 and the second supporting section 11 narrower than the length of the object to be grasped 2 in the X direction. A bottom 2b of the object to be grasped 2 is in contact with the plane 1a of the placing table 1. The placing section 12 and the placing section 14 advance between the plane 1a of the placing table 1 and the bottom 2b of the object to be grasped 2, and the object to be grasped 2 is placed on the placing section 12 and the placing section 14.

The holding section 13 and the holding section 15 pressurize the object to be grasped 2 from the lateral sides 2a. Since the holding section 13 and the holding section 15 pressurize the object to be grasped 2 with substantially the same force, the object to be grasped 2 is situated at a middle position between the holding section 13 and the holding section 15. The distance between the lateral side 2a on the -X side of the object to be grasped 2 and the placing section 12 is referred to as a first distance 16a. The distance between the lateral side 2a on the X side of the object to be grasped 2 and the placing section 14 is referred to as a second distance 16b. In this case, the first distance 16a and the second distance 16b are equal. Therefore, as the center of gravity of the object to be grasped 2 is situated at a middle position between the placing section 12 and the placing section 14, the robot hand 4 can grasp the object to be grasped 2 stably. Since the placing section 12 and the placing section 14 support the weight of the object to be grasped 2, the placing section 12 and the placing section 14 can support the object to be grasped 2 in the state where the object to be grasped 2 is not easily deformed.

FIG. 1C is a schematic enlarged view showing essential parts of the placing section and shows how the placing section 12 advances between the placing table 1 and the object to be grasped 2. As shown in FIG. 1C, the placing section 12 has a substantially circular cross-sectional shape. Therefore, when the placing section 12 moves along the object to be grasped 2, the placing section 12 is not easily caught by the placing table 1 or the object to be grasped 2. Consequently, the placing section 12 can easily move along the object to be grasped 2.

FIGS. 2A to 2D are schematic views for explaining a procedure in which the robot hand grasps an object to be grasped. As shown in FIG. 2A, first, the robot 3 moves the robot hand 4 to a position facing the object to be grasped 2. Then, the space adjusting section 9 moves the first supporting section 10 and the second supporting section 11 and thus makes the space between the placing section 12 and the placing section 14 equal to the length of the object to be grasped 2.

Next, as shown in FIG. 2B, the robot 3 lowers the robot hand 4 and causes the placing section 12 and the placing section 14 to contact the placing table 1. The placing section 12 and the placing section 14 are narrow in width. Therefore, even when the space between neighboring objects to be grasped 2 is narrow, the robot hand 4 can make the placing section 12 and the placing section 14 pass between the neighboring objects to be grasped 2. The objects to be grasped 2 are soft objects and can be easily deformed. Therefore, even when there is no space between the neighboring objects to be grasped 2, the robot hand 4 can make the placing section 12 and the placing section 14 pass between the neighboring objects to be grasped 2.

Next, as shown in FIG. 2C, the space adjusting section 9 moves the first supporting section 10 and the second supporting section 11. Thus, the placing section 12 and the placing section 14 advance between the placing table 1 and the object to be grasped 2. Then, the object to be grasped 2 is placed on the placing section 12 and the placing section 14. At this point, since the holding section 13 and the holding section 15 pressurize the lateral sides 2a of the object to be grasped 2, the center of gravity of the object to be grasped 2 is situated at a middle position between the placing section 12 and the placing section 14.

Next, as shown in FIG. 2D, the robot 3 lifts the robot hand 4. Since the object to be grasped 2 is placed stably on the placing section 12 and the placing section 14, the robot 3 can carry the object to be grasped 2 without dropping the object to be grasped 2.

As described above, this embodiment has the following advantages.

1. According to this embodiment, by making the space between the placing section 12 and the placing section 14 narrower than the length of the object to be grasped 2, the object to be grasped 2 can be placed on the placing section 12 and the placing section 14. Moreover, since the holding section 13 and the holding section 15 hold the lateral sides 2a of the object to be grasped 2, the distance between the placing section 12 and the placing section 14, and the lateral sides 2a of the object to be grasped 2, can be adjusted. Therefore, the object to be grasped 2 can be placed stably on the placing section 12 and the placing section 14. Consequently, the robot hand 4 can grasp the soft object to be grasped 2.

2. According to this embodiment, when the objects to be grasped 2 are arranged in line, the bar-like placing section 12 and placing section 14 are made to pass through the space between the objects to be grasped 2. Thus, the placing section 12 and the placing section 14 can be moved to the bottom of the object to be grasped 2. Therefore, the object to be grasped 2 can be grasped even when the neighboring objects to be grasped 2 are situated closely.

3. According to this embodiment, the bottom part 12a of the placing section 12 contacting the bottom of the object to be grasped 2 is substantially straight. Therefore, when the object to be grasped 2 is situated on the plane 1a, the placing section 12 can be moved along the plane 1a. Thus, the placing section 12 can easily be moved between the object to be grasped 2 and the plane 1a.

4. According to this embodiment, the placing section 12 and the placing section 14 have a substantially circular cross-sectional shape. Therefore, when the placing section 12 and the placing section 14 move along the object to be grasped 2, the placing section 12 and the placing section 14 are not easily caught by the object to be grasped 2. Consequently, the placing section 12 and the placing section 14 can easily move along the bottom 2b of the object to be grasped 2.

5. According to this embodiment, the central area 13a of the holding section 13 has a smaller spring constant than the peripheral area 13b. If the object to be grasped 2 is spherical, the object to be grasped 2 contacts the central area 13a of the holding section 13 and then contacts the peripheral area 13b of the holding section 13. In this case, since the central area 13a has a smaller spring constant, the holding section 13 contacts along the object to be grasped 2, following the object to be grasped 2. Thus, the object to be grasped 2 is hard to move. Therefore, the robot hand 4 can grasp the object to be grasped 2 stably.

According to this embodiment, the material of the placing section 12, the placing section 14, the holding section 13 and the holding section 15 is a metal. A metal is a material that is not easily deteriorated in cleaning and sterilization. Therefore, the placing section 12, the placing section 14, the holding section 13 and the holding section 15 can be cleaned and sterilized while restraining deterioration of these sections. In this case, the sites that are cleaned and sterilized, of the placing section 12, the placing section 14, the holding section 13 and the holding section 15 contact the object to be grasped and, are away from the space adjusting section 9. Therefore, the placing section 12, the placing section 14, the holding section 13 and the holding section 15 can be cleaned and sterilized while restraining adherence of a cleaning solution and a sterilizing solution to the space adjusting section 9.

### Second Embodiment

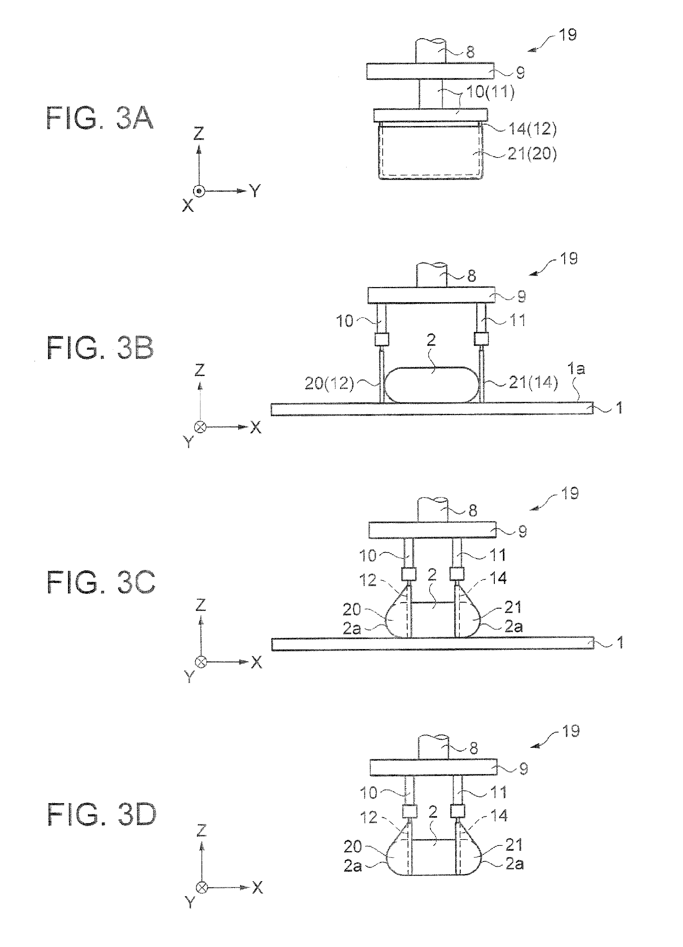

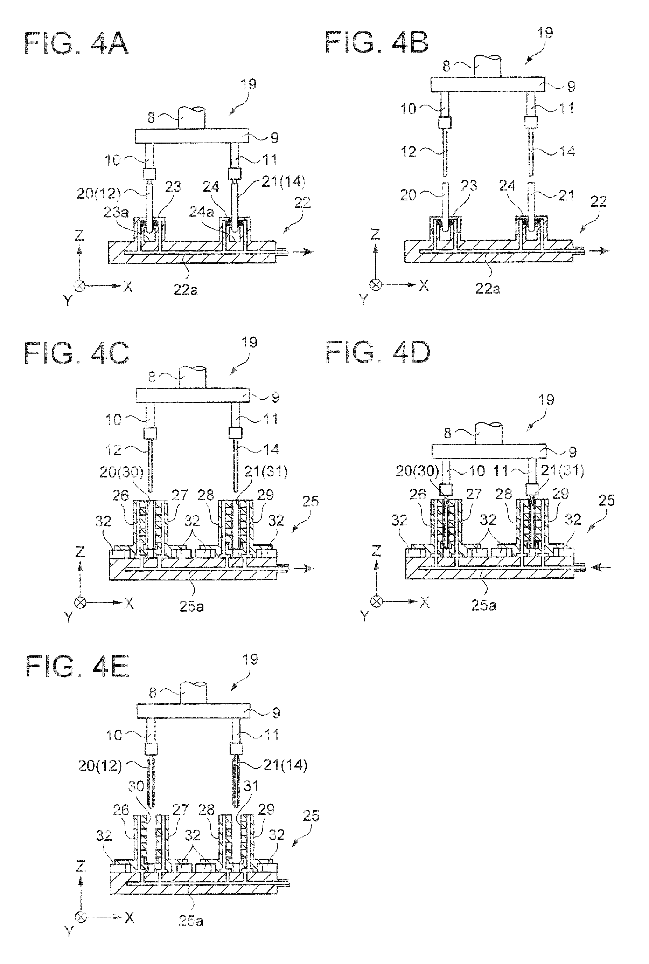

Next, an embodiment of a robot hand will be described with reference to FIGS. 3A to 3D and FIGS. 4A to 4E. FIGS. 3A to 3D are schematic views for explaining a procedure of grasping an object to be grasped. FIGS. 4A to 4E are schematic views for explaining a procedure of attaching and removing the placing sections and the holding sections. This embodiment is different from the first embodiment in that the sites equivalent to the holding section 13 and the holding section 15 shown in FIGS. 1A and 1B are made of an elastic material or the like. The same features as in the first embodiment will not be described further in detail.

That is, in this embodiment, a robot hand 19 is installed on the robot 3 and the robot hand 19 has the placing section 12 and the placing section 14, as shown in FIG. 3A. A holding section 20 is installed, covering the placing section 12. A holding section 21 is installed, covering the placing section 14. The holding section 20 and the holding section 21 are formed in a bag shape with a substantially quadrilateral outer shape and are mainly made of an elastic material. The elastic material used for the holding section 20 and the holding section 21 is not particularly limited. As the elastic material, a silicone rubber, a natural rubber with various additives added thereto, a synthetic rubber or the like can be used. In this embodiment, for example, a silicon rubber is used as the elastic material.

The holding section 20 and the holding section 21 can expand and contract. As the placing section 12 is inserted in the holding section 20 that is stretched, the holding section 20 is installed on the placing section 12. Similarly, as the placing section 14 is inserted in the holding section 21 that is stretched, the holding section 21 is installed on the placing section 14.

As shown in FIG. 3B, the robot 3 moves the robot hand 19. Then, the robot hand 19 is moved in such a way that the object to be grasped 2 is situated between the placing section 12 and the placing section 14. The placing section 12 and the placing section 14 are moved to a position contacting the plane 1a.

Subsequently, as shown in FIG. 3C, the space adjusting section 9 narrows the space between the placing section 12 and the placing section 14. The placing section 12 and the placing section 14 advance between the placing table 1 and the object to be grasped 2. Then, the object to be grasped 2 is placed on the placing section 12 and the placing section 14. The holding section 20 and the holding section 21 can expand and contract and therefore become deformed following the shape of the lateral sides 2a of the object to be grasped 2. Then, the holding section 20 and the holding section 21 pressurize the object to be grasped 2 from the -X direction and the X direction.

Since the object to be grasped 2 is pressurized evenly from both sides by the placing section 12 and the placing section 14, the center of gravity of the object to be grasped 2 is situated at a middle position between the placing section 12 and the placing section 14. Both lateral sides 2a of the object to be grasped 2 are covered by the holding section 20 and the holding section 21. Thus, the robot hand 19 can stably grasp the object to be grasped 2.

Next, as shown in FIG. 3D, the robot 3 lifts the robot hand 19. The object to be grasped 2 is placed on the placing section 12 and the placing section 14, and both lateral sides 2a are covered by the holding section 20 and the holding section 21. Therefore, the robot 3 can carry the object to be grasped 2, with the robot hand 19 stably grasping the object to be grasped 2.

FIGS. 4A and 4B show a procedure of detaching the holding section 20 from the placing section 12 and detaching the holding section 21 from the placing section 14. As shown in FIG. 4A, a holding section retaining device 22 is used to detach the holding section 20 and the holding section 21 from the robot hand 19. The holding section retaining device 22 has a first retaining section 23 and a second retaining section 24.

The first retaining section 23 has a groove section 23a extending in the Y direction. The opening of the groove section 23a is formed to be longer than the width of the holding section 20 in which the placing section 12 is inserted. Similarly, the second retaining section 24 has a groove section 24a extending in the Y direction. The opening of the groove section 24a is formed to be longer than the width of the holding section 21 in which the placing section 14 is inserted. The holding section retaining device 22 has a pipe 22a formed inside. One end of the pipe 22a is connected to a vacuum pump, not shown. The other end of the pipe 22a is connected to the groove section 23a and the groove section 24a.

The robot 3 moves the robot hand 19 and inserts the holding section 20 with the placing section 12 inserted therein, into the groove section 23a. Moreover, the robot 3 inserts the holding section 21 with the placing section 14 inserted therein, into the groove section 24a. Next, the operator actuates the vacuum pump to reduce the air pressure inside the pipe 22a. Thus, the holding section 20 is sucked to the first retaining section 23 and the holding section 21 is sucked to the second retaining section 24. That is, the first retaining section 23 and the second retaining section 24 serve as vacuum chucks.

Next, as shown in FIG. 4B, the robot 3 lifts the robot hand 19. Thus, the placing section 12 is detached from the holding section 20 and the placing section 14 is detached from the holding section 21. Therefore, the holding section 20 and the holding section 21 can be removed from the robot hand 19. Next, the operator stops the operation of the vacuum pump and removes the holding section 20 and the holding section 21 from the holding section retaining device 22. The operator may clean and sterilize the holding section 20 and the holding section 21 to reuse these sections.

FIGS. 4C to 4E show a procedure of inserting the placing section 12 in the holding section 20 and inserting the placing section 14 in the holding section 21. As shown in FIG. 4C, a holding section installing device 25 is used to install the holding section 20 and the holding section 21 in the robot hand 19. The holding section installing device 25 has a first retaining section 26 to a fourth retaining section 29.

The first retaining section 26 and the second retaining section 27 retain the holding section 20. The third retaining section 28 and the fourth retaining section 29 retain the holding section 21. A groove section 30 extending in the Y direction is formed between the first retaining section 26 and the second retaining section 27. A groove section 31 extending in the Y direction is formed between the third retaining section 28 and the fourth retaining section 29.

A linear motion mechanism 32 is installed on each of the first retaining section 26 to the fourth retaining section 29. The linear motion mechanisms 32 move the first retaining section 26 and the second retaining section 27 and thus change the width of the groove section 30 in the X direction. Moreover the linear motion mechanisms 32 move the third retaining section 28 and the fourth retaining section 29 and thus change the width of the groove section 31 in the X direction. The holding section installing device 25 has a pipe 25a formed inside. One end of the pipe 25a is connected to a vacuum pump, not shown. The other end of the pipe 25a is connected to the groove section 30 and the groove section 31.

The operator installs the holding section 20 in the groove section 30 and installs the holding section 21 in the groove section 31. Next, the operator actuates the vacuum pump to reduce the air pressure inside the pipe 25a. Thus, the holding section 20 is sucked to the first retaining section 26 and the second retaining section 27 and the holding section 21 is sucked to the third retaining section 28 and the fourth retaining section 29. That is, the first retaining section 26 and the second retaining section 27 serve as a vacuum chuck and the third retaining section 28 and the fourth retaining section 29 serve as a vacuum chuck.

Next, the linear motion mechanisms 32 move the first retaining section 26 to the fourth retaining section 29 and thus broaden the width of the groove section 30 and the groove section 31. Thus, the space between the two sides facing each other of the holding section 20 and the holding section 21 is broadened and therefore the placing section 12 and the placing section 14 can be inserted in the holding section 20 and the holding section 21, respectively, more easily.

Next, as shown in FIG. 4D, the robot 3 moves the robot hand 19 to insert the placing section 12 and the placing section 14 in the holding section 20 and the holding section 21, respectively. Next, the linear motion mechanisms 32 move the first retaining section 26 to the fourth retaining section 29 to narrow the width of the groove section 30 and the groove section 31. Then, the operator actuates the vacuum pump to restore atmospheric pressure inside the pipe 25a. Thus, the holding section 20 contracts and is thus installed on the placing section 12, and the holding section 21 contracts and is thus installed on the placing section 14.

Next, as shown in FIG. 4E, the linear motion mechanisms 32 move the first retaining section 26 to the fourth retaining section 29 to broaden the width of the groove section 30 and the groove section 31. Next, the robot 3 lifts the robot hand 19 and detaches the placing section 12 and the placing section 14 from the holding section installing device 25. By the above procedure, the holding section 20 and the holding section 21 are installed on the robot hand 19.

As described above, this embodiment has the following advantages.

1. According to this embodiment, the holding section 20 and the holding section 21 are made of a silicone rubber, which is an elastic material. Therefore, as the elastic member is arranged at the site contacting the object to be grasped 2, the object to be grasped 2 can be prevented from being damaged.

2. According to this embodiment, the holding section 20 is attachable to and removable from the placing section 12. When the holding section 20 contacts the object to be grasped 2, a part of the object to be grasped 2 may adhere to the holding section 20. Even in this case, by detaching the holding section 20 from the placing section 12 and replacing the holding section 20, a holding section 20 without having a part of the object to be grasped 2 attached thereto can be substituted. Similarly, the holding section 21 is attachable to and removable from the placing section 14. Even when a part of the object to be grasped 2 adheres to the holding section 21, the holding section 21 can be replaced and thus a holding section 21 without having a part of the object to be grasped 2 attached thereto can be substituted.

### Third Embodiment

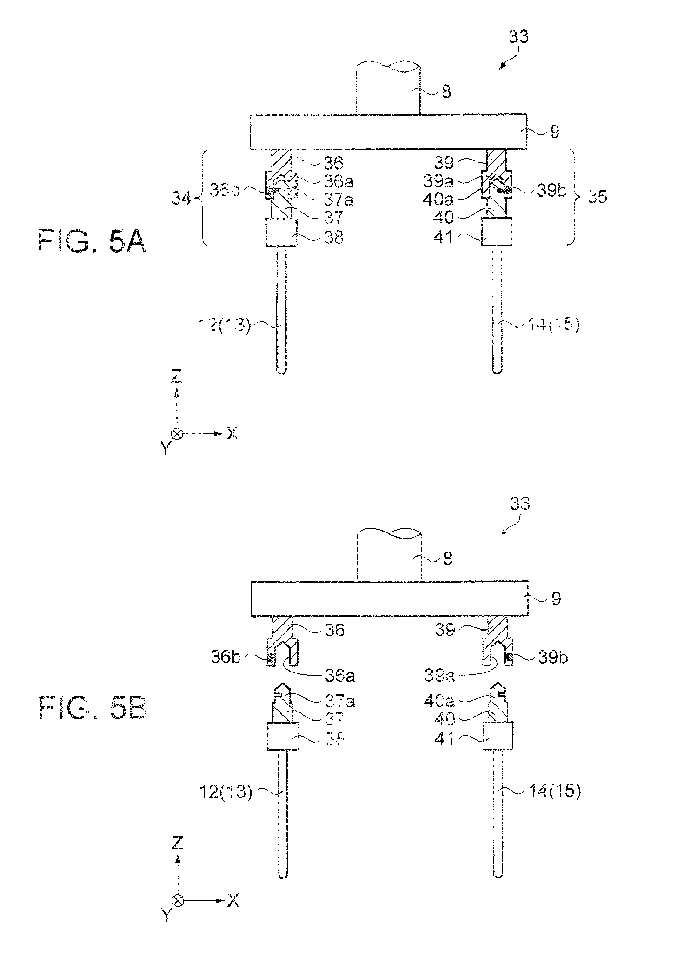

Next, an embodiment of a robot hand will be described with reference to FIGS. 5A and 5B. FIGS. 5A and 5B are schematic front views showing a structure for attaching and removing the placing sections. FIGS. 5A and 5B partly show cross-sectional views. This embodiment is different from the first embodiment in that the placing section 12 and the placing section 14 are attachable to and removable from the space adjusting section 9. The same features as in the first embodiment will not be described further in detail.

That is, in this embodiment, a first supporting section 34 and a second supporting section 35 are connected to the space adjusting section 9 of a robot hand 33, as shown in FIG. 5A. The placing section 12 and the holding section 13 are installed on the first supporting section 34. The placing section 14 and the holding section 15 are installed on the second supporting section 35.

The first supporting section 34 includes a proximal second supporting member 36, a distal second supporting member 37 and a first supporting member 38. In FIGS. 5A and 5B, the proximal second supporting member 36 and the distal second supporting member 37 are shown in cross-sectional views. A combination of the proximal second supporting member 36 and the distal second supporting member 37 is equivalent to the second supporting member 10a of the first embodiment. The first supporting member 38 is equivalent to the first supporting member 10b. A recessed part 36a is formed on the proximal second supporting member 36, and a protruding part 37a is formed on the distal second supporting member 37. As the protruding part 37a is inserted in the recessed part 36a, the proximal second supporting member 36 and the distal second supporting member 37 are connected to each other. On the proximal second supporting member 36, a fixing part 36b having a linear motion mechanism is installed. This fixing part 36b puts in and takes out a fixing pin. A fixing hole which is a hole with the same diameter as the fixing pin is formed in the protruding part 37a. As the fixing part 36b inserts the fixing pin into the fixing hole after the proximal second supporting member 36 and the distal second supporting member 37 are connected to each other, the proximal second supporting member 36 and the distal second supporting member 37 can be prevented from being disconnected.

Similarly, the second supporting section 35 includes a proximal second supporting member 39, a distal second supporting member 40 and a first supporting member 41. A combination of the proximal second supporting member 39 and the distal second supporting member 40 is equivalent to the second supporting member 11a of the first embodiment. The first supporting member 41 is equivalent to the first supporting member 11b. A recessed part 39a is formed on the proximal second supporting member 39, and a protruding part 40a is formed on the distal second supporting member 40. As the protruding part 40a is inserted in the recessed part 39a, the proximal second supporting member 39 and the distal second supporting member 40 are connected to each other. On the proximal second supporting member 39, a fixing part 39b having a linear motion mechanism is installed. This fixing part 39b puts in and takes out a fixing pin. A fixing hole which is a hole with the same diameter as the fixing pin is formed in the protruding part 40a. As the fixing part 39b inserts the fixing pin into the fixing hole after the proximal second supporting member 39 and the distal second supporting member 40 are connected to each other, the proximal second supporting member 39 and the distal second supporting member 40 can be prevented from being disconnected.

As shown in FIG. 5B, the fixing pins of the fixing part 36b and the fixing part 39b are removed from the fixing holes. Then, the distal second supporting member 37 is detached from the proximal second supporting member 36, and the distal second supporting member 40 is detached from the proximal second supporting member 39. Thus, the placing section 12 and the holding section 13 can be released from the space adjusting section 9. Similarly, the placing section 14 and the holding section 15 can be released from the space adjusting section 9. That is, the placing section 12, the holding section 13, the placing section 14 and the holding section 15 are installed in an attachable and removable manner with respect to the space adjusting section 9.

As described above, this embodiment has the following advantages.

1. According to this embodiment, the placing section 12, the holding section 13, the placing section 14 and the holding section 15 are installed in an attachable and removable manner with respect to the space adjusting section 9. When the placing section 12, the holding section 13, the placing section 14 and the holding section 15 contact the object to be grasped 2, a part of the object to be grasped 2 may adhere to the placing section 12, the holding section 13, the placing section 14 and the holding section 15. Even in this case, by detaching and replacing the placing section 12, the holding section 13, the placing section 14 and the holding section 15 from the space adjusting section 9, a placing section 12, a holding section 13, a placing section 14 and a holding section 15 without having a part of the object to be grasped 2 attached thereto can be substituted.

### Fourth Embodiment

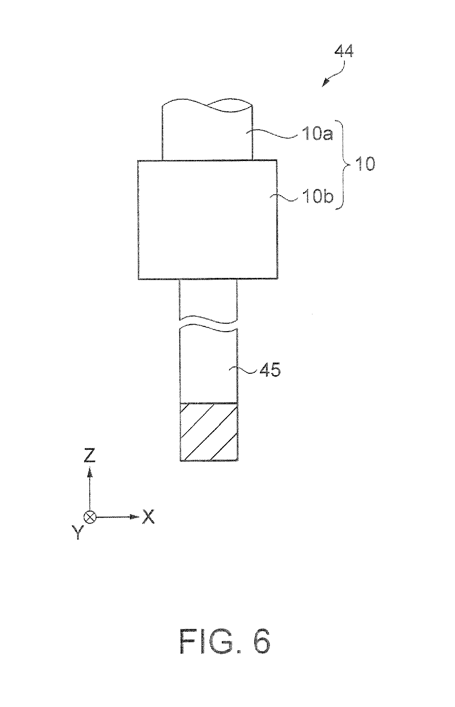

Next, an embodiment of a robot hand will be described with reference to FIG. 6. FIG. 6 is a schematic cross-sectional view showing essential part of the structure of the placing section. This embodiment is different from the first embodiment that the placing section has a substantially quadrilateral cross-sectional shape. The same features as in the first embodiment will not be described further in detail.

That is, in this embodiment, a placing section 45 connected to the first supporting section 10 is installed on a robot hand 44, as shown in FIG. 6. The placing section 45 has a substantially quadrilateral cross-sectional shape. Therefore, when the width of the placing section 45 in the X direction is a predetermined length, the placing section 45 can have a shape with a large cross-sectional area within that width. Thus, the strength of the placing section 45 can be increased even when the width of the placing section 45 is set to be narrower. In the robot hand 44, a placing section, not shown, paired with the placing section 45, can also have a substantially quadrilateral section shape.

As described above, this embodiment has the following advantages.

1. According to this embodiment, the placing section 45 has a substantially quadrilateral cross-sectional shape. Therefore, the strength of the placing section 45 can be increased even when the width of the cross-sectional shape of the placing section 45 is set to be narrower. Consequently, even when a pair of objects to be grasped 2 is arranged closely, the placing section 45 can be made to pass between the neighboring objects to be grasped 2. The placing section 45 can be moved to the bottom 2b of the object to be grasped 2.

### Fifth Embodiment

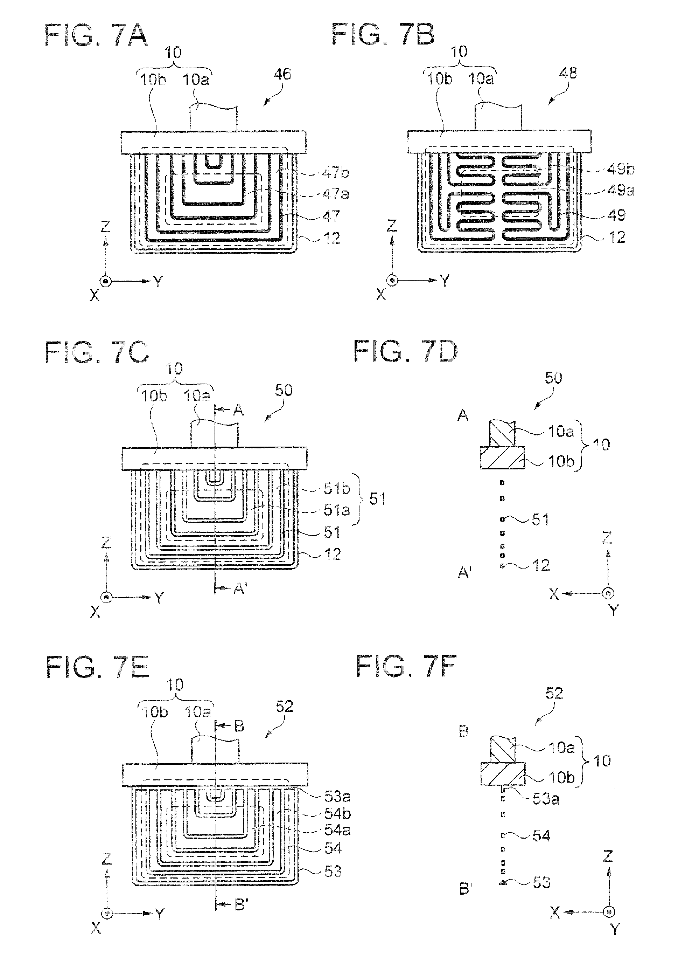

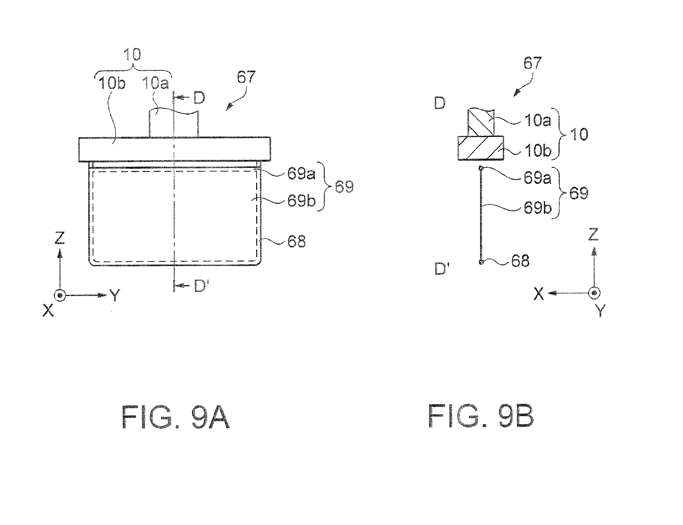

Next, various examples of placing sections and holding sections of a robot hand will be described with reference to FIGS. 7A to 7F to FIGS. 9A and 9B. FIGS. 7A to 7F to FIGS. 9A and 9B are schematic views showing structures of a robot hand. This embodiment is different from the first embodiment in that the shapes of the placing sections and the holding sections differ. The same features as in the first embodiment will not be described further in detail.

That is, in the example shown in FIG. 7A according to this embodiment, the placing section 12 and a holding section 47 connected to the first supporting section 10 are installed on a robot hand 46. In the holding section 47, plural metallic round bars with spring elasticity are formed in the shape of quadrilateral frames with different sizes. One side of the frame shapes is arranged to form the first supporting member 10b. The holding section 47 includes a central area 47a situated at the center and a peripheral area 47b situated on the periphery of the central area 47a. In the holding section 47, the space between the round bars is broader in the central area 47a than in the peripheral area 47b. Thus, the central area 47a has a smaller spring constant than the peripheral area 47b.

In the example shown in FIG. 7B, the placing section 12 and a holding section 49 connected to the first supporting section 10 are installed on a robot hand 48. In the holding section 49, four metallic round bars with spring elasticity are formed in a predetermined pattern and are installed in a place surrounded by the placing section 12. The holding section 49 includes a central area 49a situated at the center and a peripheral area 49b situated on the periphery of the central area 49a. In the holding section 49, the space between the round bars is broader in the central area 49a than in the peripheral area 49b. Thus, the central area 49a has a smaller spring constant than the peripheral area 49b.

In the example shown in FIGS. 7C and 7D, FIG. 7C shows a front view and FIG. 7D shows a side sectional view, as viewed from A-A' in FIG. 7C. The placing section 12 and a holding section 51 connected to the first supporting section 10 are installed on a robot hand 50. In the holding section 51, metallic plates with spring elasticity are formed in the shape of plural quadrilateral frames with different sizes. One side of the frame shapes is arranged to form the first supporting member 10b. The holding section 51 includes a central area 51a situated at the center and a peripheral area 51b situated on the periphery of the central area 51a. The space between the plates is broader in the central area 51a than in the peripheral area 51b. Thus, the central area 51a has a smaller spring constant than the peripheral area 51b.

In the example shown in FIGS. 7E and 7F, FIG. 7E shows a front view and FIG. 7F shows a side sectional view, as viewed from B-B' in FIG. 7E. A placing section 53 and a holding section 54 connected to the first supporting section 10 are installed on a robot hand 52. The placing section 53 is formed in the shape of a quadrilateral frame, using a triangular cylinder formed by a sheet metal folded along two parallel straight lines. A side 53a of the frame shape situated at a position contacting the first supporting member 10b is L-shaped.

In the holding section 54, metallic plates with spring elasticity are formed in the shape of plural quadrilateral frames with different sizes. One side of the holding section 54 is the side 53a and is fixed to the first supporting member 10b. The placing section 53 and the holding section 54 are formed as an integrated unit. Therefore, the placing section 53 and the holding section 54 can be formed with high productivity.

The holding section 54 includes a central area 54a situated at the center and a peripheral area 54b situated on the periphery of the central area 54a. The space between the plates is broader in the central area 54a than in the peripheral area 54b. Thus, the central area 54a has a smaller spring constant than the peripheral area 54b.

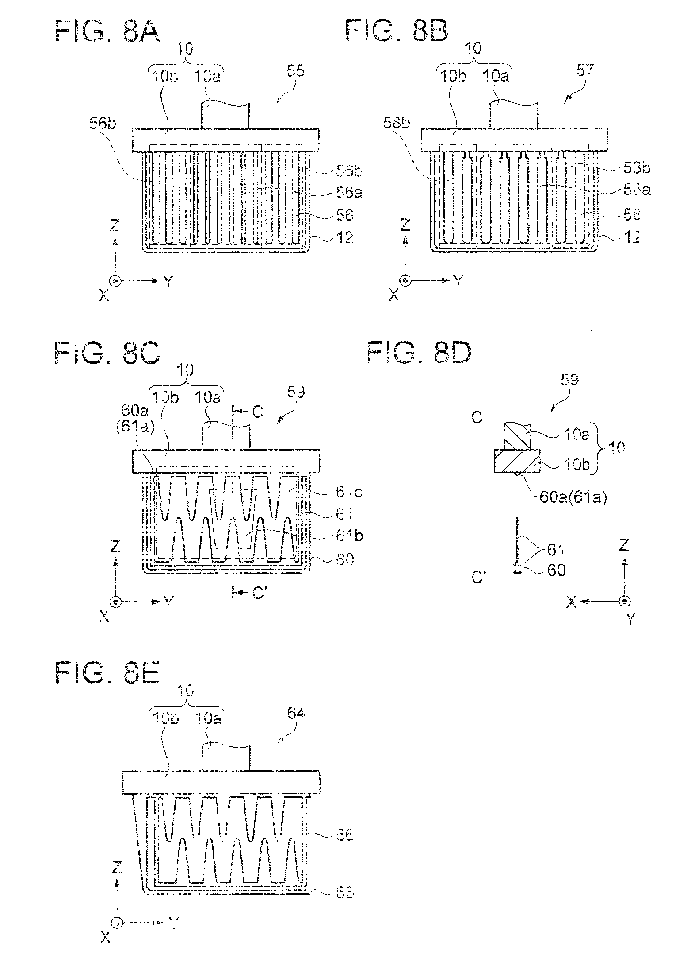

In the example shown in FIG. 8A, the placing section 12 and a holding section 56 connected to the first supporting section 10 are installed on a robot hand 55. In the holding section 56, plural linear round bars with spring elasticity, made of a metal and extending in the Z direction, are arrayed in the Y direction of the first supporting member 10b.

The holding section 56 includes a central area 56a situated at the center and a peripheral area 56b situated on the periphery of the central area 56a. In the holding section 56, the space between the round bars is broader in the central area 56a than in the peripheral area 56b. Moreover, in the holding section 56, the thickness of the round bars is smaller in the central area 56a than in the peripheral area 56b. Thus, the central area 56a has a smaller spring constant than the peripheral area 56b.

In the example shown in FIG. 8B, the placing section 12 and a holding section 58 connected to the first supporting section 10 are installed on a robot hand 57. In the holding section 58, plural straight plates with spring elasticity, made of a metal and extending in the Z direction, are arrayed in the Y direction of the first supporting member 10b.

The holding section 58 includes a central area 58a situated at the center and a peripheral area 58b situated on the periphery of the central area 58a. In the holding section 58, the width of the first supporting member 10b is narrower in the central area 58a than in the peripheral area 58b. Thus, the central area 58a has a smaller spring constant than the peripheral area 58b.

In the example shown in FIGS. 8C and 8D, FIG. 8C shows a front view and FIG. 8D shows a side sectional view, as viewed from C-C' in FIG. 8C. A placing section 60 and a holding section 61 connected to the first supporting section 10 are installed on a robot hand 59. The placing section 60 is formed in the shape of a quadrilateral frame, using a triangular cylinder formed by a sheet metal folded along two parallel straight lines. A side 60a of the frame shape situated at a position contacting the first supporting member 10b has a triangular cylindrical shape, as viewed from the Y direction.

The holding section 61 has an outer circumference formed in the shape of a quadrilateral frame using a triangular cylinder. From the side on the Z side and the side on the -Z side, triangular plates extending inward in the Z direction are arranged in the shape of combs. A side 61a, which is a side of the frame shape of the holding section 61, is the same site as the side 60a and is fixed to the first supporting member 10b. The placing section 60 and the holding section 61 are formed as an integrated unit. Therefore, the placing section 60 and the holding section 61 can be formed with high productivity.

The holding section 61 includes a central area 61b situated at the center and a peripheral area 61c situated on the periphery of the central area 61b. The space between the plates is broader in the central area 61b than in the peripheral area 61c. Thus, the central area 61b has a smaller spring constant than the peripheral area 61c.

In the example shown in FIG. 8E, a placing section 65 and a holding section 66 connected to the first supporting section 10 are installed on a robot hand 64. The placing section 65 has a quadrilateral frame shape that is formed using a triangular cylinder formed by a sheet metal folded along two parallel straight lines, with a side on the Y-direction side removed. Therefore, even when the object to be grasped 2 is elongated in the Y direction, the object to be grasped 2 can be placed on the placing section 65.

The holding section 66 has the same structure as the holding section 61 and therefore will not be described further in detail. The placing section 65 and the holding section 66 are formed as an integrated unit. Therefore, the placing section 65 and the holding section 66 can be formed with high productivity.

In the example shown in FIGS. 9A and 9B, FIG. 9A shows a front view and FIG. 9B shows a side sectional view, as viewed from D-D' in FIG. 9A. A placing section 68 and a holding section 69 connected to the first supporting section 10 are installed on a robot hand 67. The placing section 68 has the same structure as the placing section 12 of the second embodiment and therefore will not be described further in detail. On the first supporting member 10b side of the placing section 68, a film supporting section 69a made of a metal bar is arranged parallel to the first supporting member 10b. The placing section 68 and the film supporting section 69a form a substantially quadrilateral frame. An elastic section 69b made of an elastic material is installed, covering the substantially quadrilateral frame. Thus, the robot hand 67 can function similarly to the robot hand 19 of the second embodiment. The placing section 68 and the holding section 69 are formed as an integrated unit by insert molding. Thus, the site forming the placing section 68 and the holding section 69 can be formed with high productivity.

The embodiment is not limited to the above examples and various changes and improvements can be made. Examples of modification will be described hereinafter.

### Modification 1

In the first embodiment, the placing section 12 and the placing section 14 are linear on the side of the placing table 1. However, the shape of the placing section 12 and the placing section 14 is not limited to linear. When the surface of the placing table 1 is curved, the placing section 12 and the placing section 14 may be curved according to the surface of the placing table 1. The placing section 12 and the placing section 14 are thus enabled to move easily between the placing table 1 and the object to be grasped 2.

### Modification 2

The cross-sectional shape of the placing section 12 is substantially circular in the first embodiment but may also be substantially elliptical. Also in this case, when the placing section 12 moves along the object to be grasped 2, the placing section 12 is not easily caught by the placing table 1 and the object to be grasped 2. Consequently, the placing section 12 can easily move along the object to be grasped 2. Moreover, by making the cross-sectional shape of the placing section 12 elliptical extending in the X direction, the area of the site where the object to be grasped 2 is placed can be increased. Thus, the shape of the object to be grasped 2 that is grasped can be made hard to collapse.

### Modification 3

In the first embodiment, a pair of placing sections, that is, the placing section 12 and the placing section 14 are moved. However, three or more placing sections may be used. Each placing section may be moved toward the center of the object to be grasped 2. When many placing sections are used, there are many sites to receive the object to be grasped 2 and therefore the object to be grasped 2 can be supported stably. The number of holding sections may be preferably the same as the number of placing sections. Thus, the object to be grasped 2 can be supported stably.

### Modification 4

In the second embodiment, the holding section 20 and the holding section 21 are formed in the shape of a bag using an elastic material. However, the holding section 20 and the holding section 21 may be meshed films. The expansion and contraction of the holding section 20 and the holding section 21 can be enhanced further.

### Modification 5

In the second embodiment, the holding section retaining device 22 and the holding section installing device 25 are used to remove and attach the holding section 20 and the holding section 21. The operator may also expand the holding section 20 and the holding section 21 by blowing air into these sections and thus attach and remove these sections. A technique that enables easy attachment and removal with a simple device may be employed.

### Modification 6

In the third embodiment, the first supporting section 34 is separated into the proximal second supporting member 36 and the distal second supporting member 37. Also, the first supporting section 34 may be detached from the space adjusting section 9, and the placing section 12 and the holding section 13 may be detached from the first supporting section 34. The first supporting section 34 may be detached at either site. Alternatively, any position that enables easy detachment may be employed.

### Modification 7

In the fourth embodiment, the placing section 45 has a substantially quadrilateral cross-sectional shape. Also, preferably, the corners of the substantially quadrilateral shape may be chamfered or curved. This makes the placing section hard to be caught by the object to be grasped 2. Therefore, the object to be grasped 2 and the placing section 45 can be prevented from being damaged.

## Claims

1. A robot hand comprising:
a placing section which is formed by a bar in the form of a substantially quadrilateral frame with a first supporting member and where an object to be grasped is placed;
a supporting section which is formed by connecting one end of a second supporting member to a center of the first supporting member and retains the placing section;
a space adjusting section which moves the supporting section while retaining the second supporting member, and adjusts a space between plural units of the placing section; and
a holding section arranged within the frame formed by the first supporting member and the placing section.

2. The robot hand according to claim 1, wherein a part where the placing section contacts a bottom of the object to be grasped is a substantially linear bar.

3. The robot hand according to claim 1 or 2, wherein a cross-sectional shape of the placing section orthogonal to a longitudinal direction is substantially circular or substantially elliptical.

4. The robot hand according to claim 1 or 2, wherein a cross-sectional shape of the placing section orthogonal to a longitudinal direction is substantially quadrilateral.

5. The robot hand according to any one of the preceding claims, wherein the holding section is formed by a spiral bar and includes a central area including a center of the spiral and a peripheral area situated on a periphery of the central area, and the central area has a smaller spring constant than a spring constant of the peripheral area.

6. The robot hand according to any one of the preceding claims, wherein at least a part of a site contacting the object to be grasped, of the placing section and the holding section, is made of a metal.

7. The robot hand according to any one of the preceding claims, wherein the placing section and the holding section are formed as an integrated unit.

8. The robot hand according to any one of the preceding claims, wherein at least a part of the holding section is made of an elastic material.

9. The robot hand according to any one of the preceding claims, wherein the holding section is attachable to and removable from the placing section.

10. The robot hand according to any one of the preceding claims, wherein the holding section is attachable to and removable from the space adjusting section.

11. A robot having a robot hand according to any one of the preceding claims
a placing section which is formed by a bar in the form of a substantially quadrilateral frame with a first supporting member and where an object to be grasped is placed;
a supporting section which is formed by connecting one end of a second supporting member to a center of the first supporting member and retains the placing section;
a space adjusting section which moves the supporting section while retaining the second supporting member, and adjusts a space between plural units of the placing section; and
a holding section arranged within the frame formed by the first supporting member and the placing section.
